# EUROPÄISCHE PATENTSCHRIFT

(11) **EP 4 199 280 B1**
(45) Veröffentlichungstag und Bekanntmachung des Hinweises auf die Patenterteilung: **11.09.2024**
(21) Anmeldenummer: 22211906.7
(22) Anmeldetag: 07.12.2022
(51) Int. Cl.: H02B 3/00

(54) **WERKSTÜCKTRÄGER FÜR DEN SCHALT- UND STEUERUNGSANLAGENBAU**
WORKPIECE CARRIER FOR SWITCHGEAR AND CONTROLGEAR CONSTRUCTION
SUPPORT DE PIÈCES POUR LA CONSTRUCTION D'APPAIRELLAGES DE COMMUTATION ET DE COMMANDE

(30) Priorität: 20.12.2021 DE 102021133818
(43) Veröffentlichungstag der Anmeldung: 21.06.2023
(73) Patentinhaber: Rittal GmbH & Co. KG, 35745 Herborn (DE)
(72) Erfinder: Baechler, Andreas Michael, 35708 Haiger (DE)
(74) Vertreter: Angerhausen, Christoph

(56) Entgegenhaltungen:
- DE-U1- 202010 002 342
- US-A1- 2006 065 796
- PRECISION ZONE ET AL: "ETTE 1000 Mounting Table Review", 27 October 2016 (2016-10-27), XP093044793, Retrieved from the Internet <URL:https://www.youtube.com/watch?v=ADrUc99hVOI> [retrieved on 20230506]

## Beschreibung

Die Erfindung geht aus von einem Werkstückträger für den Schalt- und Steuerungsanlagenbau, wobei der Werkstückträger ein auf Rollen stehendes und verfahrbares Untergestell aufweist, an welchem ein eine Montageebene für das Werkstück aufspannender Halterahmen höhenverstellbar und um eine horizontale Achse verschwenkbar montiert ist. Ein derartiger Werkstückträger ist aus der DE 20 2013 002 488 U1 bekannt. Ähnliche Werkstückträger beschreiben auch die DE 10 2017 128 295 A1, die DE 20 2009 015 930 U1, die DE 20 2010 002 342 U1, die DE 20 2011 001614 U1, die XP093044732 und die US 2006/00065796 A1.

Für die Bearbeitung einer Montageplatte, etwa für den Aufbau einer elektrischen Schalt- oder Steuerungsanlage auf der Montageplatte, muss die Montageplatte aus dem Schaltschrankgehäuse entnommen, zwischen verschiedenen Bearbeitungsstationen transportiert werden und anschließend wieder mit der aufgebauten elektrischen Schalt- oder Steuerungsanlage wieder in dem Schaltschrankgehäuse montiert werden. Beispielsweise werden bei einer ersten Bearbeitungsstation Ausbrüche und Bohrungen in die Montageplatte eingebracht. Bei einer anderen Bearbeitungsstation können Kabelkanäle, Hutschienen und dergleichen auf der Montageplatte vorinstalliert werden. In einer weiteren Bearbeitungsstation können Komponenten auf der Montageplatte, beispielsweise auf vorinstallierten Hutschienen, montiert werden. In einem weiteren Montageschritt erfolgen die Verkabelung der Komponenten und die Verlegung der Kabel in den vorbereiteten Kabelkanälen. Schließlich kann eine Qualitätssicherung der erstellten Schaltanlage erfolgen, beispielsweise die Überprüfung von Übergangswiderständen, Abzugswiderständen und dergleichen. Während sämtlicher Bearbeitungsschritte soll die Montageplatte auf dem Werkstückträger montiert und von diesem zwischen den Bearbeitungsstationen manövriert werden können. Gegebenenfalls ist es auch erforderlich, dass die Montageplatte in Abhängigkeit des erfolgten Bearbeitungsschrittes angewinkelt wird, um eine effiziente und ergonomische Bearbeitung zu ermöglichen.

Die aus dem Stand der Technik bekannten Werkstückträger haben den Nachteil, dass sie nur eine sehr eingeschränkte Adaptierbarkeit an unterschiedliche aufzunehmende Werkstücke aufweisen, wozu es insbesondere erforderlich ist, den Abstand der Befestigungsmittel zueinander an entsprechende Aufnahmepunkte an dem Werkstück anzupassen. Beispielsweise ist es abhängig von den Abmessungen einer Montageplatte erforderlich, dass beispielsweise vier an den Ecken eines Rechtsecks angeordnete Befestigungsmittel in die Flucht mit jeweils einem Schüsselloch in den Ecken der Montageplatte gebracht werden, sodass die Befestigungsmittel über die Schlüssellöcher an dem Werkstück befestigt werden können.

Es ist daher die Aufgabe der Erfindung, einen Werkstückträger der eingangs beschriebenen Art derart weiterzuentwickeln, dass er eine einfache Adaptierbarkeit an unterschiedliche Abmessungen eines aufzunehmenden Werkstücks aufweist.

Diese Aufgabe wird durch einen Werkstückträger mit den Merkmalen des Anspruchs 1 gelöst. Die abhängigen Ansprüche betreffen jeweils vorteilhafte Ausführungsformen der Erfindung.

Demgemäß es ist bei dem Werkstückträger vorgesehen, dass der Halterahmen mindestens zwei Haltearme aufweist, die an ihren in Bezug auf das Untergestell proximalen Enden um eine sich senkrecht zu der Montageebene erstreckende Achse verschwenkbar sind und an ihrem dem proximalen Ende gegenüberliegenden distalen Ende ein Befestigungsmittel für ein Werkstück aufweisen.

Dabei kann die Montageebene zumindest anteilig von mindestens zwei Haltearmen aufgespannt werden, welche wiederum an einem ihrer gegenüberliegenden Enden in der Montageebene verschwenkbar montiert sind, während die Haltearme an dem gegenüberliegenden, freien Ende das Befestigungsmittel aufweisen. Das Befestigungsmittel ist auf keine bestimmte Ausführungsform beschränkt und kann an das zu montierende Werkstück angepasst sein. Beispielsweise kann für die Befestigung einer Montageplatte an dem Werkstückträger ein Befestigungsmittel vorgesehen sein, welches dazu eingerichtet ist, in ein jeweiliges, an der Montageplatte werkseitig bereitgestelltes Schlüsselloch einzugreifen und dieses in einer Arretierungsposition des Befestigungsmittels zu hintergreifen, sodass die Montageplatte kraftschlüssig mit dem Befestigungsmittel verbunden ist. Alternativ kann das Befestigungsmittel ein magnetisches Befestigungsmittel sein, beispielsweise ein Permanentmagnet, welcher einen in Bezug auf eine Befestigungsseite des Befestigungsmittels einstellbaren Abstand aufweist, sodass eine magnetische Anziehungskraft, die zwischen dem Befestigungsmittel und dem zu befestigenden Werkstück, beispielsweise einer Montageplatte, wirkt, einstellbar ist. Mithilfe magnetischer Befestigungsmittel kann im Wesentlichen jedes beliebige Werkstück an den Werkstückträger befestigt werden, solange es magnetisch oder magnetisierbar ist. Insbesondere kann auch vorgesehen sein, das ganze Schaltschrankgehäuse, insbesondere ein Kleingehäuse, an dem Werkstückträger zu montieren, um es beispielsweise für die Nachbearbeitung zur Einbringung von Ausbrüchen, Ausschnitten und dergleichen, einer entsprechenden Bearbeitungsanlage zuzuführen. Anstelle magnetischer Befestigungsmittel oder zusätzlich zu diesen können auch Vakuumsauger vorgesehen sein, um das zu bearbeitende Werkstück an dem Werkstückträger zu montieren. Grundsätzlich sollen die Befestigungsmittel auf keine besonderen Befestigungsmittel beschränkt sein, solange sie die reversible Befestigung und Wiederablösung von dem Werkstückträger und den sicheren Halt des Werkstücks beim Transport und während der Bearbeitung des Werkstücks gewährleisten.

Die beiden Haltearme können in Bezug auf Ihre Verschwenkbarkeit um die sich senkrecht zu der Montageebene erstreckende Achse gegenläufig zwangsgekoppelt sein. Dadurch kann erreicht werden, dass die beiden Haltearme, wenn sie beispielsweise zur Vergrößerung oder zur Verkleinerung eines relativen Abstands zueinander manuell betätigt werden, gleichermaßen ihren Abstand zu einer Mittelachse des Halterahmens vergrößern oder verkleinern, selbst wenn lediglich einer der beiden Haltearme betätigt wird.

Die beiden Haltearme können für die Zwangskopplung jeweils an ihrem proximalen Ende eine auf jeweils einem Kreisbogen angeordnete Zahnung aufweisen, wobei sich die beiden Zahnungen gegenseitig kämmen.

Die beiden Haltearme können um dieselbe sich senkrecht zu der Montageebene erstreckende Achse oder um separate Achsen verschwenkbar sein. Eine Arretierung der beiden Haltearme zueinander kann dadurch erreicht werden, dass die beiden Haltearme an ihrem proximalen Ende parallele und sich überlappende Scheiben aufweisen, welche in bevorzugten relativen Stellpositionen der beiden Haltearme zueinander fluchtende Durchlässe für die Aufnahme eines Arretierungsbolzens aufweisen. Die fluchtenden Durchlässe oder Bohrungen können mit dem Arretierungsbolzen wahlweise zueinander festgelegt oder voneinander freigelegt werden. Dazu kann der Arretierungsposition ein federvorgespannter Bolzen sein, der in einer Verriegelungsposition durch die beiden fluchtenden Durchlässe oder Bohrungen hindurchtritt und in einer Freigabeposition aus zumindest einem der beiden fluchtenden Durchlässe oder Bohrungen herausgezogen ist.

Die bevorzugten Stellpositionen der beiden Haltearme zueinander können beispielsweise entsprechend der möglichen horizontalen Abstände der Schlüssellöcher unterschiedlicher Montageplatten ausgewählt sein.

Beispielsweise kann der Arretierungsbolzen an einer Abdeckung des Halterahmens oder an einer ersten der Scheiben montiert und mit einer Federvorspannung in Richtung der anderen Scheibe vorgespannt sein. Durch manuelles Vorspannen des Arretierungsbolzens kann der Arretierungsbolzen aus seiner Verrieglungsposition in eine Freigabeposition zurückgezogen werden, in welcher er die Scheiben zueinander freigibt. Wenn der Arretierungsbolzen Bestandteil einer der Schienen ist, kann vorgesehen sein, dass die den Arretierungsbolzen aufweisende Scheibe lediglich einen, den Arretierungsbolzen aufnehmenden Durchlass oder eine entsprechende Bohrung aufweist, während die andere Scheibe in der zuvor beschriebenen Weise, beispielsweise auf einem Kreisabschnitt zueinander beabstandet, eine Mehrzahl Arretierungsbolzenaufnahmen aufweist, anhand welcher die vorgenannten bevorzugten Abstände der Haltearme, insbesondere der Befestigungsmittel an den distalen Enden, vorgegeben sind. Besonders bevorzugt sind dabei die Haltearme in der zuvor beschriebenen Weise miteinander zwangsgekoppelt, beispielsweise mithilfe sich kämmender Zahnungen. Hierzu weisen die beiden Haltearme an ihren proximalen Enden vorzugsweise voneinander beabstandete Drehachsen senkrecht zu der Montageebene auf.

Der Halterahmen weist vorzugsweise vier Haltearme auf, die mit ihren Befestigungsmitteln an ihren distalen Enden vier Befestigungspunkte in den Ecken eines Rechtecks bereitstellen. Diese Ausführungsform ist insbesondere dann bevorzugt, wenn der Werkstückträger für die Befestigung von Flachteilen, insbesondere von Montageplatten, Verwendung finden soll.

Zur weiteren Erhöhung der Adaptierbarkeit des Werkstückträgers, insbesondere der relativen Anordnung der Befestigungsmittel zueinander, kann vorgesehen sein, dass die Haltearme teleskopierbar sind. Zur Vereinfachung der Bedienung kann dabei vorgesehen sein, dass die Haltearme bei unterschiedlichen Haltearmlängen jeweils eine Rastposition aufweisen.

Mindestens einer der Haltearme kann an seinem distalen Ende einen Ausleger aufweisen, der um eine sich senkrecht zu der Montageebene erstreckende Drehachse verdrehbar ist, und an dem das Befestigungsmittel des mindestens einen Haltearms exzentrisch angeordnet ist. Diese Ausführungsform bezweckt die Bedienbarkeit des Werkstückträgers zu erleichtern. Insbesondere dann, wenn die Montagearme eine vergleichsweise große Länge aufweisen, kann mithilfe der exzentrischen Lagerung der Befestigungsmittel an den distalen Enden der Haltearme eine Feinjustierung erfolgen.

Der Halterahmen kann für die Höhenverstellung und/oder für das Verschwenken um die horizontale Achse einen Antrieb aufweisen, der in einer untersten Position des Halterahmens bei horizontaler Ausrichtung des Halterahmens nur in mindestens einer bestimmten Drehposition des Halterahmens um die Normale zur Montageebene ansteuerbar ist. Dadurch wird erreicht, dass eine die Standsicherheit des Werkstückträgers beeinträchtigende Verlagerung des Schwerpunkts des Werkstückträgers beim Verschwenken und/oder beim Anheben des Halterahmens vermieden wird.

Der Halterahmen kann über ein Drehlager um die Normale zur Montageebene verdrehbar sein, wobei das Drehlager zwei zueinander verdrehbare Lagerteile aufweist, von denen ein erstes Lagerteil drehfest in Bezug auf die Normale zur Montageebene und das Untergestell ausgebildet ist. Ein zweites Lagerteil kann drehfest in Bezug auf den übrigen Halterahmen ausgebildet sein.

Der Werkstückträger kann an einer dem Halterahmen zugewandten Seite, beispielsweise an einer horizontalen Oberseite, des Untergestells einen Taster aufweisen, der in einer von der mindestens einen bestimmten Drehposition des Halterahmens um die Normale verschiedenen Drehposition des Halterahmens um die Normale mit seinem Tastkopf auf dem zweiten Lager aufliegt. Dabei kann der Taster betätigt und die Ansteuerbarkeit des Antriebs unterbrochen sein. Um eine zuverlässige Betätigung des Tasters zu gewährleisten kann das zweite Lagerteil vorzugsweise als eine Flanschplatte ausgebildet sein oder eine solche aufweisen.

Das erste Lagerteil kann einen Durchbruch aufweisen, durch den der Taster zumindest mit seinem Tastkopf hindurchragt, wenn der Halterahmen mit in seiner untersten Position angeordnet und horizontal ausgerichtet ist. Der Taster kann in der mindestens einen bestimmten Drehposition mit dem Tastkopf in einer Ausnehmung aufgenommen sein, wobei der Taster freigegeben und der Antrieb ansteuerbar ist. Mithin ist die Ausnehnung vorzugsweise gerade so tief ausgebildet, dass eine Betätigung des Tasters und damit eine Unterbrechung der Ansteuerbarkeit des Antriebs ausbleibt. Besonders bevorzugt ist die Ausnehmung in dem zweiten Lagerteil des Drehlagers ausgebildet. Wenn das zweite Lagerteil in Bezug auf das erste Lagerteil verdreht wird, verlagert sich die Ausnehmung in Bezug auf den Tastkopf derart, dass der Tastkopf aus der Ausnehmung herausgedrückt und damit der Taster betätigt wird. Dadurch kann bei einer beispielshaften Ausführungsform sichergestellt werden, dass lediglich in der mindestens einen Position, in welcher der Taster mit seinem Tastkopf in die mindestens eine Ausnehmung eingreift, freigelassen wird und damit die Ansteuerbarkeit des Antriebs nicht unterbrochen wird.

Bei einer Ausführungsform kann vorgesehen sein, dass der Halterahmen nur in seiner horizontalen Ausrichtung in Bezug auf das Untergestell um eine vertikale Achse verdrehbar ist, wenn der Halterahmen in einer untersten Stellung angeordnet ist, in welcher er auf dem Untergestellt aufliegt. Dadurch wird sichergestellt, dass der Halterahmen nicht in einer angehobenen oder aus der Horizontalen um die Achse senkrecht zur Montageebene verschwenkten Ausrichtung in der Montageebene verdreht wird, wodurch sich eine für die Standfestigkeit ungünstige Verlagerung des Schwerpunkts des Werkstückträgers ergeben könnte.

Bei einer Ausführungsform der Erfindung ist vorgesehen, dass das Untergestell an seiner horizontalen Oberseite, auf welcher der Halterahmen aufliegt, mindestens einen Vorsprung aufweist, der in der untersten Stellung in eine Bohrung, vorzugsweise eine Durchgangsbohrung, des Halterahmens hineinragt und eine Drehsicherung aus der Bohrung auslöst, die den Halterahmen in Bezug auf eine Drehung um die vertikale Achse arretiert. Wird der Halterahmen somit aus der zuvor beschriebenen untersten Position bei horizontaler Ausrichtung herausbewegt, beispielsweise durch vertikales Anheben und/oder durch Verkippen des Halterahmens um eine horizontale Schwenkachse, kommt der Vorsprung mit der Bohrung außer Eingriff, sodass die Drehsicherung den Halterahmen in Bezug auf eine Drehung um die vertikale z-Achse arretiert. In der beschriebenen horizontalen Ausrichtung des Halterahmens fällt die vertikale Achse mit der Normalen zur Montageebene zusammen.

Wenn der Halterahmen über ein Drehlager um die Normale zur Montageeben verdrehbar ist, wozu das Drehlager zwei zueinander verdrehbare Lagerteile aufweisen kann, von denen ein erstes Lagerteil drehfest in Bezug auf die Normale zur Montageebene und das Unterstell ausgebildet ist, und wobei ein zweites Lagerteil drehfest in Bezug auf den übrigen Halterahmen ausgebildet ist, kann das erste Lagerteil eine Flanschplatte aufweisen, mit der der Halterahmen in seiner horizontalen Ausrichtung auf dem Untergestell aufliegt. Dabei kann vorgesehen sein, dass der bereits beschriebene Vorsprung in die Flanschplatte eingreift und einen Verriegelungsstift des zweiten Lagerteils aus der Bohrung herausdrückt und damit die Drehsicherung auslöst, sodass die beiden Lagerteile zueinander und damit der Halterahmen um die Normale zur Montageebene beziehungsweise die vertikale Achse gedreht werden kann.

Der Verrieglungsstift des zweiten Lagerteils kann in Richtung des ersten Lagerteils mechanisch vorgespannt und verstellbar sein. Dabei kann die Bohrung in der Flanschplatte des ersten Lagerteils eine Durchgangsbohrung sein. In dieser Durchgangsbohrung kann der Vorsprung durch eine dem Untergestell zugewandte Seite der Flanschplatte hineinragen, wobei der Vorsprung den Verriegelungsstift in Richtung einer gegenüberliegenden und dem zweiten Lagerteil zugewandte Seite der Flanschplatte aus der Flanschplatte herausdrückt, wenn der Halterahmen in seiner untersten Stellung angeordnet ist.

Weitere Einzelheiten der Erfindung werden anhand der nachstehenden Figuren erläutert. Dabei zeigt:
- Figur 1: in der Seitenansicht eine beispielhafte Ausführungsform eines erfindungsgemäßen Werkstückträgers;
- Figur 2: den Werkstückträger gemäß Figur 1 in perspektivischer Darstellung;
- Figur 3: das distale Ende der Haltearme der Ausführungsform gemäß den Figuren 1 und 2;
- Figur 4: eine Draufsicht auf die Unterseite des Halterahmens der Ausführungsform gemäß den Figuren 1 bis 3;
- Figur 5: eine Draufsicht auf die Oberseite des Halterahmens der Ausführungsform gemäß den Figuren 1 bis 3;
- Figur 6: eine Detailansicht eines Werkstückträgers mit horizontal ausgerichtetem Halterahmen, welcher teilweise von dem Untergestell abgehoben ist;
- Figur 7: die Ausführungsform gemäß Figur 6 mit vollständig auf dem Untergestell abgesenktem Halterahmen;
- Figur 8: eine Detailansicht der Darstellung gemäß Figur 7 im Bereich des Tasters; und
- Figur 9: eine Detailansicht der Ausführungsformen gemäß Figur 7 im Bereich der Drehsicherung.

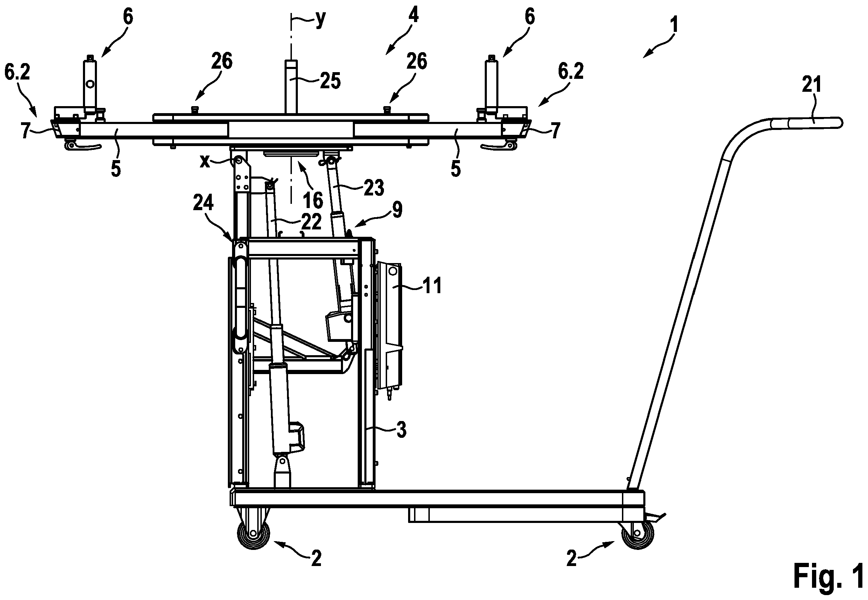

Die Figuren 1 bis 5 zeigen eine beispielhafte Ausführungsform eines erfindungsgemäßen Werkstückträgers 1. Ein solcher Werkstückträger 1 kann beispielsweise dazu verwendet werden, um im Schalt- und Steuerungsanlagenbau ein zu bearbeitendes Werkstück 100 zwischen verschiedenen Bearbeitungsstationen zu transportieren, wobei das Werkstück 100 vorzugsweise ununterbrochen von dem Werkstückträger 1 gehalten wird. Besonders bevorzugt kann das Werkstück 100 ein Flachteil, beispielsweise eine Montageplatte sein, die mithilfe des Werkstückträgers 1 aus dem angelieferten Schaltschrankgehäuse herausgehoben wird, um anschließend in der zuvor beschriebenen Weise zwischen verschiedenen Bearbeitungsstationen transportiert zu werden. Dies kann die Einbringung von Ausbrüchen und Bohrungen, die Bestückung der Montageplatte mit Hutschienen, elektrischen Komponenten, Kabelkanälen sowie anderen Komponenten des Schalt- und Steuerungsanlagenbau umfassen. Die Bearbeitung kann auch die Verdrahtung der Komponenten sowie Schritte zur Qualitätssicherung aufweisen. Nachdem die Schaltanlage auf der Montageplatte aufgebaut worden ist, kann die sich immer noch auf dem Werkstückträger 1 befindende Montageplatte zurück zu dem Schaltschrankgehäuse transportiert und mithilfe des Werkstückträgers wieder in das Schaltschrankgehäuse eingesetzt werden. Die Montageplatte weist von Haus aus ein hohes Gewicht von, je nach Größe, mehreren 10 kg auf. Die mit einer Schaltanlage bestückte Montageplatte kann ein Gewicht von mehreren 100 kg aufweisen. Mithilfe des Werkstückträgers 1 ist keinerlei manuelle Handhabung der Montageplatte von der Entnahme bis zur Wiedermontage im Schaltschrankgehäuse erforderlich.

Für die Demontage der Montageplatte aus dem Schaltschrankgehäuse ist es erforderlich, dass der Halterrahmen 4 aus der in Figur 1 gezeigten horizontalen Ausrichtung in eine im Wesentlichen vertikale Ausrichtung gebracht wird, um mit den Befestigungsmitteln 6 an den distalen Enden 6.2 der Haltearme 5 des Halterrahmens 4 in Eingriff gebracht zu werden. Die Befestigungsmittel 6 sind vorliegend dazu eingerichtet, mit entsprechenden Durchbrüchen in der Montageplatte in Eingriff gebracht zu werden. Diese Durchbrüche können beispielsweise werksseitig vorhandene Schlüssellöcher in den Ecken der Montageplatte sein, wie sie üblicherweise für eine Masseverbindung zwischen Montageplatte und Gehäuse verwendet werden. Dieser Masseanschluss kann dann nach der Wiedermontage der Montageplatte im Schaltschrankgehäuse und nach dem Außereingriffbringen der Befestigungsmittel 6 mit den Schlüssellöchern hergestellt werden.

Der Halterrahmen 4 ist um die eingezeichnete Achse x senkrecht zur Zeichnungsebene verschwenkbar, um ihn beispielsweise aus der zuvor beschriebenen Vertikalausrichtung in die in Figur 1 gezeigte Horizontalausrichtung zu bringen. Darüber hinaus ist der Halterrahmen 4 entlang der Achse y vertikal verstellbar. Für die vertikale Verstellbarkeit weist der Werkstückträger 1 eine Linearführung 24 auf, über welche der Halterrahmen 4 mit dem Untergestell 3 des Werkstückträgers 1 verstellbar verbunden ist. Die Linearführung 24 ist von einem Hubzylinder 22 angetrieben. Die Verstellung des Halterrahmens 4 um die x-Achse wird mithilfe eines Schwenkzylinders 23 erreicht. Sowohl der Hubzylinder 22 als auch der Schwenkzylinder 23 können als Hydraulikzylinder oder elektromechanisch, etwas als Spindelantrieb, ausgebildet sein, die von einem Antrieb 11 angetrieben sind.

Darüber hinaus ist der Halterrahmen 4 über ein Drehlager 16 in Bezug auf das Untergestell um die y-Achse verdrehbar, mithin in der von dem Halterrahmen 4 aufgespannten Montageebene. Ein Taster 9 ist dazu eingerichtet, den Antrieb 11 nur in bestimmten Drehpositionen des Halterrahmens 4 um die y-Achse in Bezug auf das Untergestell 3 freizugeben und ihn im Übrigen zu unterbrechen, sodass eine versehentliche Verstellung des Halterrahmens 4 in der y-Richtung oder um die x-Achse vermieden wird, wenn beispielsweise eine solche Verlagerung des Halterrahmens 4 mit einem möglicherweise montierten Werkstück aufgrund der Ausrichtung des Halterrahmens 4 und des daran montierten Werkstücks zu einer unvorteilhaften Verlagerung des Schwerpunktes des Werkstückträgers 1 führen und damit die Standfestigkeit des Werkstückträgers 1 negativ beeinflussen könnte.

Das Untergestell 3 steht auf Rollen 2 und ist mithilfe eines Griffs 21 verfahrbar, beispielsweise um den Werkstückträger 1 in der zuvor beschriebenen Weise zwischen unterschiedlichen Bearbeitungsstationen des vollintegrierten Schaltanlagenbaus zu transportieren.

Der Werkstückträger 1 weist vorliegend vier Haltearme 5 auf, die jeweils teleskopierbar und im Wesentlichen kreuzförmig und symmetrisch in Bezug auf die Mittellängsachse des Werkstückträgers 1 angeordnet sind. Diese Ausrichtung der Haltearme 5 bzw. Konfiguration des Halterrahmens 4 kann eine der zuvor beschriebenen bevorzugten Ausrichtungen sein. Die Haltearme 5 weisen an ihren distalen Enden 6.2 jeweils ein Befestigungsmittel 6 auf, welches für die Feinjustage wiederum über einen Ausleger 7 an dem Halter am 5 montiert ist. Der in seiner Längsrichtung teleskopierbaren Haltearme 5 weist verschiedene Rastpositionen auf, die beispielsweise an die Abmessungen üblicher Montageplatten angepasst sein können. Ein Arretierungsbolzen 26 ist dazu vorgesehen, um den Haltearm 5 in einer bevorzugten Auszugsposition zu arretieren. Am Außenumfang des männlichen Teils des teleskopierbaren Haltearms 5 ist eine Skala angeordnet, um die Bestimmung einer erforderlichen Auszugsposition zu erleichtern.

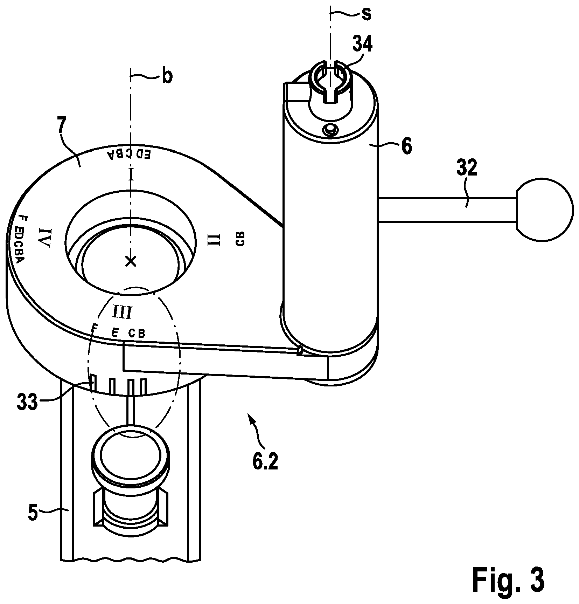

Wie in Figur 3 zu erkennen ist, weist auch der Ausleger 7 am distalen Ende 6.2 des Haltearms 5 eine Feinskala 33 auf, um eine entsprechende Feinjustierung des Befestigungsmittels 6 zu erreichen. Das an dem Ausleger 7 exzentrisch angeordnete Befestigungsmittel 6 ist um eine parallel zu der Längserstreckung des Befestigungsmittel 6 angeordnete Achse b zu verdrehen. An dem freien Ende des Befestigungsmittel 6 ist ein Schlüssellochadapter 34 ausgebildet. Der Schlüssellochadapter 34 ist mit dem Befestigungsmittel 6 mithilfe eines Hebels 32 um die Achse s verdrehbar. So kann beispielsweise nach dem Auflegen der Montageplatte auf dem Befestigungsmittel 6 durch eine 90°-Drehung des Hebels 32 der seitliche Vorsprung des Schlüssellochadapters 34 derart verdreht werden, dass er die Berandung des Schlüssellochs hintergreift und damit die Montageplatte an dem Befestigungsmittel 6 festlegt.

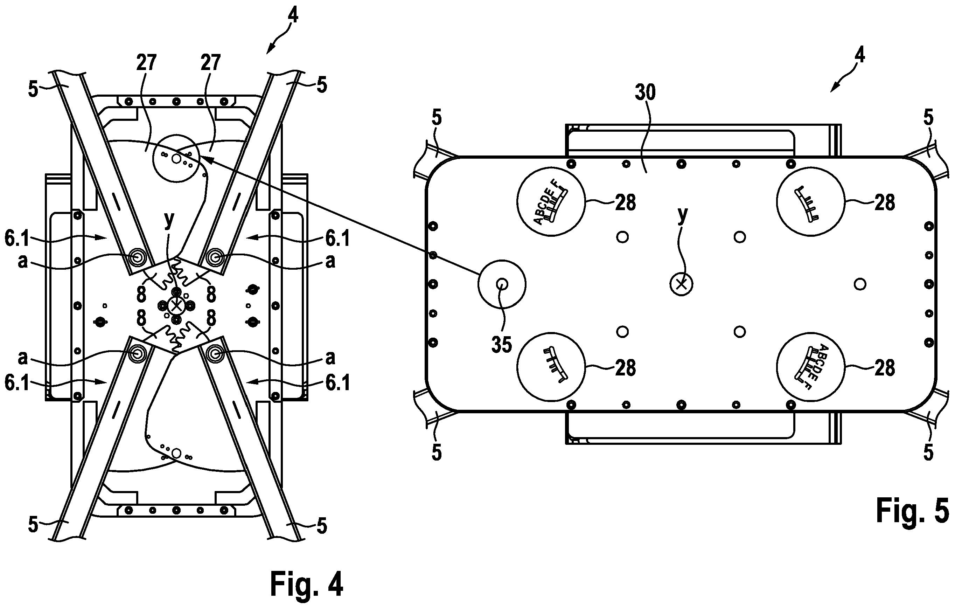

Wie in den Figuren 4 und 5 dargestellt ist, weist der Halterrahmen 4 eine Abdeckung 30 auf, die die proximalen Enden 6.1 der Haltearme 5 verdeckt. Die proximalen Enden 6.1 umgeben die Drehachse y des Drehlager 16 mit ihren Drehachsen a. Die Haltearme 5 weisen an den proximalen Enden 6.1 jeweils eine auf einem Kreisbogen angeordnete Zahnung 8 auf, wobei die Zahnungen 8 der Haltearme 5 sich paarweise kämmen und damit eine Zwangskopplung zwischen den Halterrahmen 5 erzeugen. Wird somit einer der Haltearme 5 beispielsweise manuell um seine Drehachse a verschwenkt, führt die Zwangskopplung dazu, dass auch der zugeordnete, über die sich kämmenden Zahnungen 8 zwangsgekoppelte zweite Haltearm 5 eine entsprechende, jedoch entgegengesetzte Schwenkbewegung ausführt.

Die paarweise zwangsgekoppelten Haltearme 5 weisen jeweils eine Scheibe 27 auf, die überlappen und in einem Überlappungsbereich jeweils eine Mehrzahl Bohrungen aufweisen. Die Bohrungen der beiden Scheiben 27 fluchten paarweise, wann immer die beiden Haltearme 5 eine bevorzugte Ausrichtung zueinander einnehmen. Die bevorzugte Ausrichtung der Haltearme 5 kann beispielsweise danach bestimmt sein, dass die beiden Befestigungsmittel 6 an den distalen Enden 6.2 der zwangsgekoppelten Haltearme 5 einen Abstand zueinander aufweisen, der einem Abstand zweier Schlüssellöcher einer Montageplatte entsprechen. Wie in Figur 5 gezeigt ist, ist für die Betätigung von der Oberseite der Abdeckung 30 durch die Abdeckung 30 hindurch ein Rastmittel 35, beispielsweise ein federvorgespannter Bolzen vorgesehen, welcher in den zuvor genannten Vorzugspositionen der Haltearme 5 zueinander, in welchen die Bohrungen in den Scheiben 27 paarweise fluchten, ein Paar fluchtender Löcher durchragt und damit die Scheiben 27 und folglich die Haltearme 5 zueinander festlegt. Für die Ausrichtung der Haltearme 5 sind auf der Abdeckung 30 Skalen 28 vorgesehen. Die Skalen 28 weisen jeweils einen kreisbogenförmigen Durchbruch durch die Abdeckung 30 sowie Markierungen auf der der Abdeckung 30 zugewandten Seite der Scheiben 27 auf, welche von der Oberseite der Abdeckung 30 durch die bogenförmigen Durchbrüche hindurch sichtbar sind.

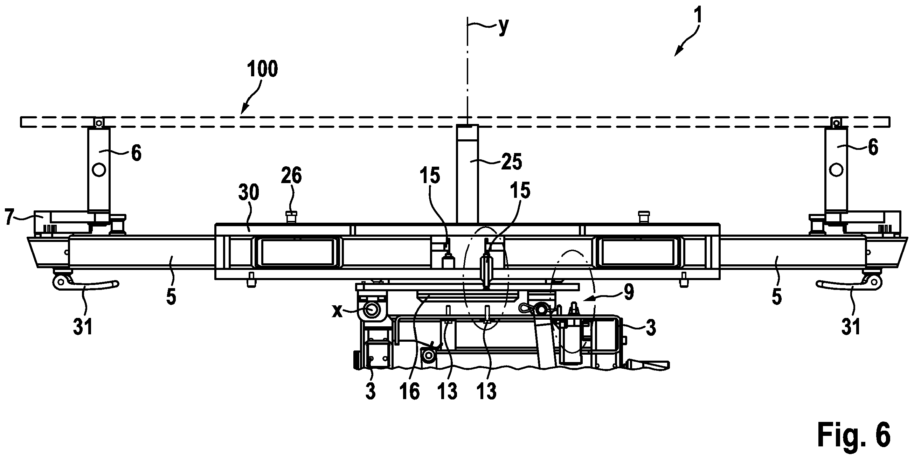

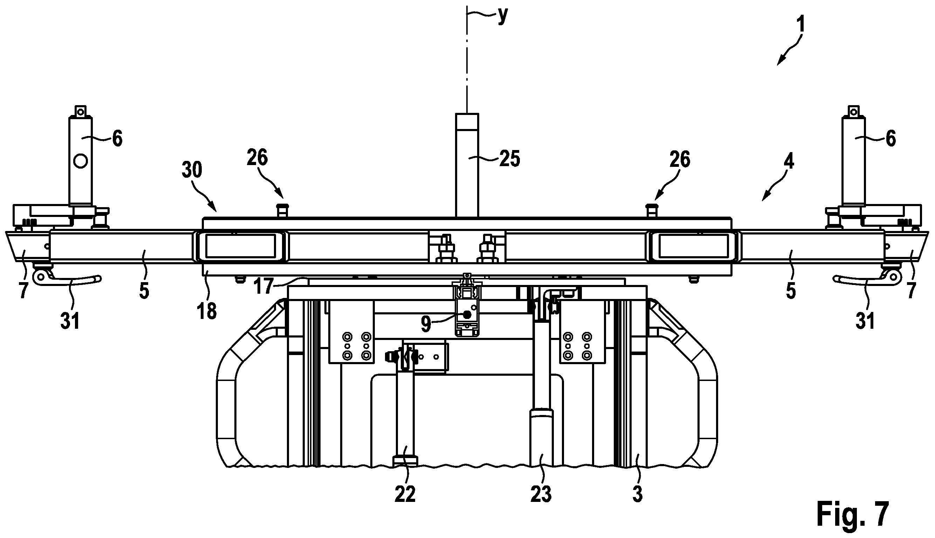

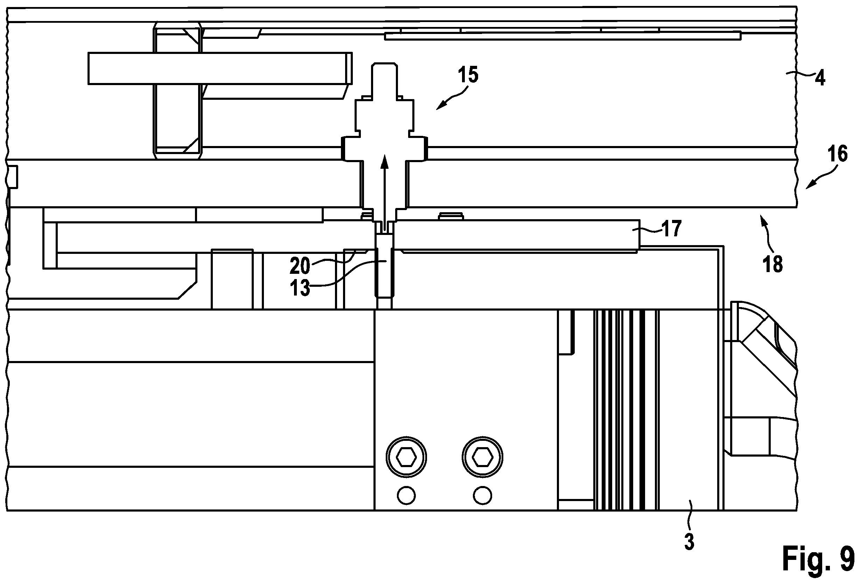

Die Figuren 6 bis 9 zeigen eine Ausführungsform, bei der eine Drehsicherung 15 vorgesehen ist, um eine Verdrehung des Halterrahmens 4 um die y-Achse nur dann zuzulassen, wenn der Halterahmen 4 in einer untersten Position angeordnet ist, wie sie in Figur 7 gezeigt ist. In der in Figur 6 gezeigten, abgehobenen Position des Halterrahmens, bei der der Halterahmen nicht auf dem Untergestell 3 aufliegt, soll die Drehsicherung 15 das Verdrehen des Halterrahmens 4 unterbinden, um beispielsweise eine versehentliche für die Standsicherheit des Werkstückträgers 1 unvorteilhafte Verlagerung des Schwerpunkts des Werkstückträgers 1 zu vermeiden. Wie in Figur 9 zu erkennen ist, weist die Drehsicherung 15 einen Vorsprung 13, beispielsweise einen Bolzen, auf, welcher aus einer horizontalen Oberseite des Untergestells 3 vorsteht und in der in Figur 9 gezeigten, vollständig auf dem Untergestell 3 abgesenkten, untersten Position des Halterrahmens 4 in eine Bohrung 20 in dem dem Untergestell zugewandten Lagerteil 17 hineinragt des Drehlagers 16 eingreift. Dadurch verdrängt der Vorsprung 13 einen federvorgespannten Bolzen der Drehsicherung 15, welcher die beiden Lagerteile 17, 18 des Drehlager 16 zueinander festlegt.

Sobald der Halterrahmen 4 in der vertikaler Richtung y von dem Untergestell 3 abgehoben wird, hebt sich auch das dem Untergestell 3 zugewandten Lagerteil 17 von dem Vorsprung 13 ab, sodass der federvorgespannte Bolzen der Drehsicherung 15 wieder in die Bohrung 20 eindringen und dadurch die beiden Lagerteile 17,18 zueinander festlegen kann, sodass eine Verdrehung des Halterrahmens in Bezug auf das Untergestell unterbunden wird.

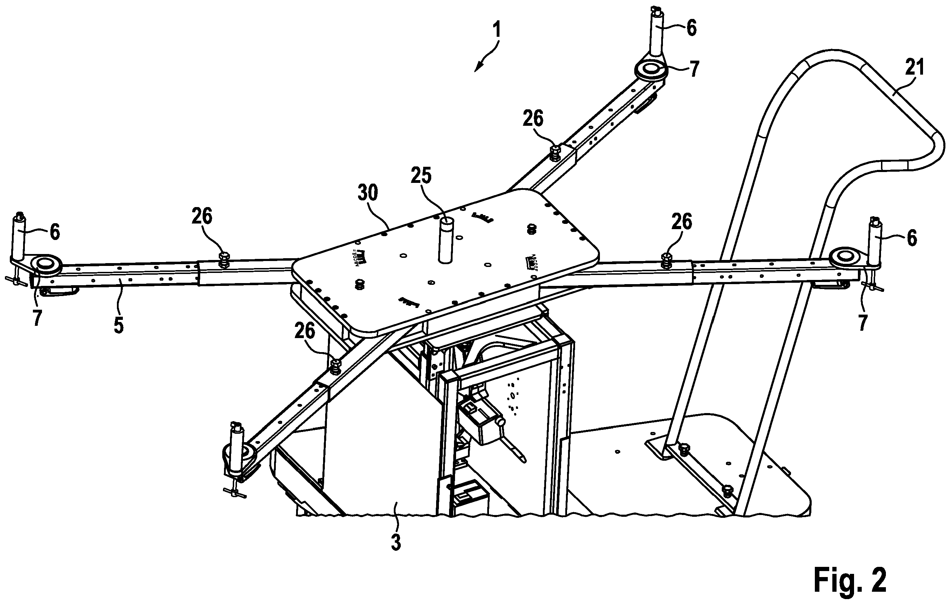

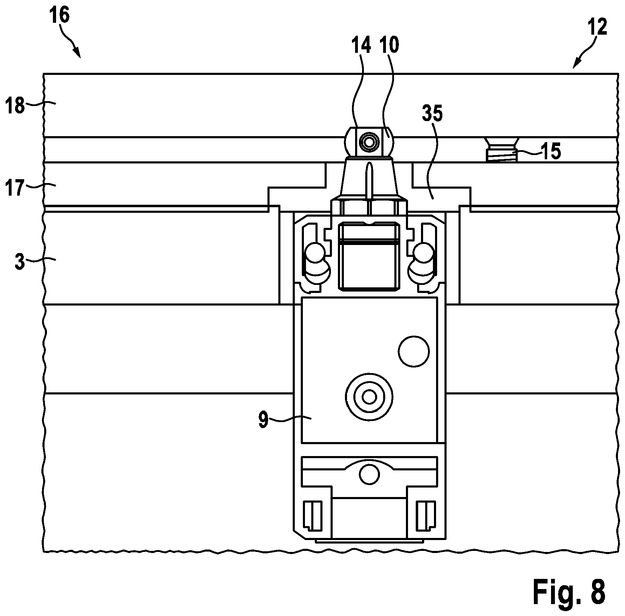

Die Ausführungsform weist weiterhin einen Taster 9 auf, der dazu eingerichtet ist, die Ansteuerung des Hubzylinders 22 und/oder des Schwenkzylinders 23, vorzugsweise jedoch beider Komponenten, zu unterbinden, wenn immer der Halterahmen 4 nicht in einer bevorzugten Ausrichtung in Bezug auf das Untergestell angeordnet ist. Demgemäß weist der Werkstückträger 1 an einer dem Halterrahmen 4 zugewandten Seite, vorliegend an der horizontalen Oberseite des Untergestells 3, einen Taster 9 auf, der in mindestens einer und vorzugsweise jeder von der mindestens einen bestimmen Drehposition des Halterrahmens 4 um die Normale zu der Montageebene verschiedenen Drehposition des Halterrahmens 4 mit seinem Tastkopf 10 auf dem zweiten Lagerteil 18 aufliegt, sodass der Taster 9 betätigt und dabei die Ansteuerbarkeit des Antriebs 11 unterbrochen wird. Dazu kann das zweite Lagerteil 18 vorzugsweise als eine Flanschplatte 12 ausgebildet sein. In der in Figur 8 dargestellten untersten Position des Halterrahmens, bei der der Halterahmen mit dem Drehlager maximal dem Untergestell 3 angenähert ist bzw. auf dessen Oberseite aufliegt, ragt der Taster 9 mit seinem Tastkopf 10 betätigungsfrei durch das dem Untergestell 3 zugewandte erste Lagerteil 17 hindurch. Die Figur 8 zeigt gerade die bevorzugte Ausrichtung des zweiten Lagerteils 18 in Bezug auf das erste Lagerteil 17, in welcher beispielsweise der Halterrahmen 4 in der in Figur 2 dargestellten Ausrichtung in Bezug auf das Untergestell 3 angeordnet sein kann. In dieser bevorzugten Ausrichtung der beiden Lagerteile 17, 18 zueinander ragt der Tastkopf 10 betätigungsfrei in eine Ausnehmung 14 an der dem ersten Lagerteil 17 zugewandten Seite des zweiten Lagerteils 18 ein. Wird nun das zweite Lagerteil 18 in Bezug auf das erste Lagerteil 17 um die y-Achse verdreht, rollt der Betätigungskopf 10 über eine die Ausnehmung 14 umrandende Anlaufschräge auf die dem ersten Lagerteil 17 zugewandte Außenseite des zweiten Lagerteils 18 ab. Da die Außenseite des zweiten Lagerteils 18 näher beabstandet zu dem ersten Lagerteil ist als der Boden der Ausnehmung, wird der Tastkopf 10 in vertikaler Richtung nach unten gedrückt und damit der Taster 9 betätigt. Die Betätigung des Tasters 9 bewirkt die Unterbrechung der Ansteuerbarkeit des Antriebs 11 und damit des Hubzylinders 22 und des Schwenkzylinders 23.

Die in der vorstehenden Beschreibung, in den Zeichnungen sowie in den Ansprüchen offenbarten Merkmale der Erfindung können im durch die Ansprüche definierten Schutzumfang sowohl einzeln als auch in beliebiger Kombination für die Verwirklichung der Erfindung wesentlich sein.

### Bezugszeichenliste:

- 1: Werkstückträger
- 2: Rolle
- 3: Untergestell
- 4: Halterahmen
- 5: Haltearm
- 6: Befestigungsmittel
- 6.1: proximales Ende
- 6.2: distales Ende
- 7: Ausleger
- 8: Zahnung
- 9: Taster
- 10: Tastkopf
- 11: Antrieb
- 12: Flanschplatte
- 13: Vorsprung
- 14: Ausnehmung
- 15: Drehsicherung
- 16: Drehlager
- 17: erstes Lagerteil
- 18: zweites Lagerteil
- 19: Verrieglungsstift
- 20: Buchung
- 21: Griff
- 22: Hubzylinder
- 23: Schwenkzylinder
- 24: Linearführung
- 25: Unterstützung
- 26: Arretierungsbolzen
- 27: Scheibe
- 28: Skala
- 29: Durchbruch
- 30: Abdeckung
- 31: Schnellspanner
- 32: Hebel
- 33: Feinskala
- 34: Schlüssellochadapter
- 35: Rastmittel
- 100: Werkstück
- a: Drehachse Haltearm
- b: Drehachse Ausleger
- s: Drehachse Befestigungsmittel
- x: horizontale Schwenkachse
- y: vertikale Drehachse

## Patentansprüche

1. Werkstückträger (1) für den Schalt- und Steuerungsanlagenbau, wobei der Werkstückträger (1) ein auf Rollen (2) stehendes und verfahrbares Untergestell (3) aufweist, an welchem ein eine Montageebene für ein Werkstück (100) aufspannender Halterahmen (4) höhenverstellbar und um eine horizontale Achse (x) verschwenkbar montiert ist, wobei der Halterahmen (4) mindestens zwei Haltearme (5) aufweist, die an ihrem in Bezug auf das Untergestell (3) proximalen Ende (6.1) um eine Achse (a) verschwenkbar sind und an ihrem dem proximalen Ende (6.1) gegenüberliegenden distalen Ende (6.2) ein Befestigungsmittel (6) für ein Werkstück (100) aufweisen, **dadurch gekennzeichnet, dass** die Achse (a), um welche die Haltearme (5) verschwenkbar sind, sich senkrecht zu der Montageebene erstreckt.

2. Werkstückträger (1) nach Anspruch 1, bei dem die zwei Haltearme (5) in Bezug auf ihre Verschwenkbarkeit um die sich senkrecht zu der Montageebene erstreckende Achse (a) gegenläufig zwangsgekoppelt sind.

3. Werkstückträger (1) nach Anspruch 2, bei dem die zwei Haltearme (5) für die Zwangskopplung jeweils an ihrem proximalen Ende (6.1) eine auf jeweils einem Kreisbogen angeordnete Zahnung (8) aufweisen, die sich gegenseitig kämmen.

4. Werkstückträger (1) nach einem der vorangegangenen Ansprüche, bei dem der Halterahmen (4) vier der Haltearme (5) aufweist, die mit ihren Befestigungsmitteln (6) an ihren distalen Enden (6.2) vier Befestigungspunkte in den Ecken eines Rechtecks bereitstellen.

5. Werkstückträger (1) nach einem der vorangegangenen Ansprüche, bei dem die Haltearme (5) telekopierbar sind und bei unterschiedlichen Haltearmlängen eine Rastposition aufweisen.

6. Werkstückträger (1) nach einem der vorangegangenen Ansprüche, bei dem mindestens einer der Haltearme (5) an seinem distalen Ende (6.2) einen Ausleger (7) aufweist, der um eine sich senkrecht zu der Montageebene erstreckende Drehachse (b) verdrehbar ist, und an dem das Befestigungsmittel (6) des mindestens einen Haltearms (5) exzentrisch angeordnet ist.

7. Werkstückträger (1) nach einem der vorangegangenen Ansprüche, bei dem der Halterahmen (4) für die Höhenverstellung und/oder für das Verschwenken um die horizontale Achse (x) einen Antrieb (11) aufweist, der in einer untersten Position des Halterahmens (4) bei horizontaler Ausrichtung des Halterahmens (4) nur in mindestens einer bestimmen Drehposition des Halterahmens (4) um die Normale zur Montageebene ansteuerbar ist.

8. Werkstückträger (1) nach einem der vorangegangenen Ansprüche, bei dem der Halterahmen (4) über ein Drehlager (16) um die Normale zur Montageebene verdrehbar ist, wobei das Drehlager (16) zwei zueinander verdrehbare Lagerteile (17, 18) aufweist, von denen ein erstes Lagerteil (17) drehfest in Bezug auf die Normale zur Montageebene und das Untergestell ausgebildet ist, und wobei ein zweites Lagerteil (18) drehfest in Bezug auf den übrigen Halterahmen (4) ausgebildet ist.

9. Werkstückträger (1) nach Anspruch 8, der an einer dem Halterahmen (4) zugewandten Seite, vorzugsweise an einer horizontalen Oberseite, des Untergestells (3) einen Taster (9) aufweist, der in einer von der mindestens einen bestimmen Drehposition des Halterahmens (4) um die Normale verschiedenen Drehposition des Halterahmens (4) um die Normale mit seinem Tastkopf (10) auf dem zweiten Lagerteil aufliegt, wobei der Taster (9) betätigt und die Ansteuerbarkeit des Antriebs (11) unterbrochen ist, und wozu das zweite Lagerteil vorzugsweise als eine Flanschplatte (12) ausgebildet ist.

10. Werkstückträger (1) nach Anspruch 9, bei dem das erste Lagerteil einen Durchbruch aufweist, durch den der Taster (9) zumindest mit seinem Tastkopf (10) hindurchragt, wenn der Halterahmen (4) in seiner untersten Position angeordnet und horizontal ausgerichtet ist.

11. Werkstückträger (1) nach Anspruch 9 oder 10, bei dem der Taster (9) in der mindestens einen bestimmen Drehposition mit dem Tastkopf (10) in einer Ausnehmung (14) aufgenommen ist, wobei der Taster (9) freigegeben und der Antrieb (11) ansteuerbar ist.

12. Werkstückträger (1) nach einem der vorangegangenen Ansprüche, bei dem der Halterahmen (4) nur in seiner horizontalen Ausrichtung in Bezug auf das Untergestell (3) um eine vertikale Achse (y) verdrehbar ist, wenn der Halterahmen (3) in einer untersten Stellung angeordnet ist, in welcher er auf dem Untergestell (3) aufliegt.

13. Werkstückträger (1) nach Anspruch 12, bei dem das Untergestell (3) an seiner horizontalen Oberseite, auf welcher der Halterahmen (4) aufliegt, mindestens einen Vorsprung (13) aufweist, der in der untersten Stellung in eine Bohrung (20) des Halterahmens (4) hineinragt und eine Drehsicherung (15) aus der Bohrung (20) auslöst, die den Halterahmen (4) in Bezug auf eine Drehung um die vertikale Achse (y) arretiert.

14. Werkstückträger (1) nach Anspruch 13, bei dem der Halterahmen (4) über ein Drehlager (16) um die Normale zur Montageebene verdrehbar ist, wozu das Drehlager (16) zwei zueinander verdrehbare Lagerteile (17, 18) aufweist, von denen ein erstes Lagerteil (17) drehfest in Bezug auf die Normale zur Montageebene und das Untergestell ausgebildet ist, und wobei ein zweites Lagerteil (18) drehfest in Bezug auf den übrigen Halterahmen (4) ausgebildet ist, und wobei das erste Lagerteil (17) eine Flanschplatte (12) aufweist, mit der der Halterahmen (4) in seiner horizontalen Ausrichtung auf dem Untergestell (3) aufliegt, wobei der Vorsprung (13) in die Flanschplatte (12) eingreift und einen Verriegelungsstift (19) des zweiten Lagerteils aus der Bohrung (18) herausdrückt.

15. Werkstückträger (1) nach Anspruch 14, bei dem der Verriegelungsstift (19) des zweiten Lagerteils (18) in Richtung des ersten Lagerteils (17) mechanisch vorgespannt und verstellbar ist, wobei die Bohrung in der Flanschplatte (12) des ersten Lagerteils (17) eine Durchgangsbohrung ist, in welche der Vorsprung (13) durch eine dem Untergestell (3) zugewandte Seite der Flanschplatte (12) hineinragt, wobei der Vorsprung (13) den Verriegelungsstift (19) in Richtung einer gegenüberliegenden und dem zweiten Lagerteil (18) zugewandten Seite der Flanschplatte (12) aus der Flanschplatte (12) herausdrückt, wenn der Halterahmen (3) in einer untersten Stellung angeordnet ist.

## Claims

1. Workpiece carrier (1) for switching and control system construction, wherein the workpiece carrier (1) has a movable base frame (3) which stands on rollers (2) and on which a holding frame (4) which spans a mounting plane for a workpiece (100) is mounted in a height-adjustable manner and so as to be pivotable about a horizontal axis (x), wherein the holding frame (4) has at least two holding arms (5) which are pivotable about an axis (a) at their proximal end (6.1) in relation to the base frame (3) and have a fastening means (6) for a workpiece (100) at their distal end (6.2) opposite the proximal end (6.1), **characterized in that** the axis (a) about which the holding arms (5) are pivotable extends perpendicularly to the mounting plane.

2. Workpiece carrier (1) according to claim 1, in which the two holding arms (5) are positively coupled in opposite directions in relation to their pivotability about the axis (a) extending perpendicularly to the mounting plane.

3. Workpiece carrier (1) according to claim 2, in which the two holding arms (5) for the positive coupling each have, at their proximal end (6.1), a toothing (8) which is arranged in each case on a circular arc and meshes with one another.

4. Workpiece carrier (1) according to one of the preceding claims, in which the holding frame (4) has four of the holding arms (5) which, with their fastening means (6), provide four fastening points in the corners of a rectangle at their distal ends (6.2).

5. Workpiece carrier (1) according to one of the preceding claims, in which the holding arms (5) can be copied and have a latching position in the case of different holding arm lengths.

6. Workpiece carrier (1) according to one of the preceding claims, in which at least one of the holding arms (5) has, at its distal end (6.2), an extension arm (7) which is rotatable about an axis of rotation (b) extending perpendicularly to the mounting plane and on which the fastening means (6) of the at least one holding arm (5) is arranged eccentrically.

7. Workpiece carrier (1) according to one of the preceding claims, in which the holding frame (4) has, for the height adjustment and/or for the pivoting about the horizontal axis (x), a drive (11) which, in a lowermost position of the holding frame (4) with horizontal alignment of the holding frame (4), can be actuated only in at least one specific rotational position of the holding frame (4) about the normal to the mounting plane.

8. Workpiece carrier (1) according to one of the preceding claims, in which the holding frame (4) is rotatable about the normal to the mounting plane via a rotary bearing (16), wherein the rotary bearing (16) has two bearing parts (17, 18) which are rotatable with respect to one another and of which a first bearing part (17) is formed rotationally fixed with respect to the normal to the mounting plane and the base frame, and wherein a second bearing part (18) is formed rotationally fixed with respect to the rest of the holding frame (4).

9. Workpiece carrier (1) according to claim 8, which has, on a side of the base frame (3) facing the holding frame (4), preferably on a horizontal upper side, a probe (9) which, in a rotational position of the holding frame (4) about the normal different from the at least one specific rotational position of the holding frame (4) about the normal, rests with its probe head (10) on the second bearing part, wherein the probe (9) is actuated and the actuatability of the drive (11) is interrupted, and for which purpose the second bearing part is preferably formed as a flange plate (12).

10. Workpiece carrier (1) according to claim 9, in which the first bearing part has an aperture through which the probe (9) projects at least with its probe head (10) when the holding frame (4) is arranged in its lowermost position and is aligned horizontally.

11. Workpiece carrier (1) according to claim 9 or 10, in which the probe (9) is received in the at least one specific rotational position with the probe head (10) in a recess (14), wherein the probe (9) is released and the drive (11) can be actuated.

12. Workpiece carrier (1) according to one of the preceding claims, in which the holding frame (4) is rotatable about a vertical axis (y) only in its horizontal alignment with respect to the base frame (3) when the holding frame (3) is arranged in a lowermost position in which it rests on the base frame (3).

13. Workpiece carrier (1) according to claim 12, in which the base frame (3) has, on its horizontal upper side on which the holding frame (4) rests, at least one projection (13) which, in the lowermost position, projects into a bore (20) of the holding frame (4) and triggers an anti-rotation means (15) out of the bore (20), which anti-rotation means locks the holding frame (4) in relation to a rotation about the vertical axis (y).

14. Workpiece carrier (1) according to claim 13, in which the holding frame (4) is rotatable about the normal to the mounting plane via a rotary bearing (16), for which purpose the rotary bearing (16) has two bearing parts (17, 18) which are rotatable with respect to one another and of which a first bearing part (17) is formed rotationally fixed with respect to the normal to the mounting plane and the base frame, and wherein a second bearing part (18) is formed rotationally fixed with respect to the rest of the holding frame (4), and wherein the first bearing part (17) has a flange plate (12) with which the holding frame (4) rests on the base frame (3) in its horizontal alignment, wherein the projection (13) engages in the flange plate (12) and presses a locking pin (19) of the second bearing part out of the bore (18).

15. Workpiece carrier (1) according to claim 14, in which the locking pin (19) of the second bearing part (18) is mechanically pretensioned and adjustable in the direction of the first bearing part (17), wherein the bore in the flange plate (12) of the first bearing part (17) is a through-bore into which the projection (13) projects through a side of the flange plate (12) facing the base frame (3), wherein the projection (13) presses the locking pin (19) out of the flange plate (12) in the direction of an opposite side of the flange plate (12) facing the second bearing part (18) when the holding frame (3) is arranged in a lowermost position.

## Revendications

1. Porte-pièce (1) pour la construction d'installations de commutation et de commande, dans lequel le porte-pièce (1) comprend un châssis inférieur (3) monté sur roulettes (2) et mobile, sur lequel un cadre de maintien (4), définissant un plan de montage pour une pièce (100), est monté de manière réglable en hauteur et pivotante autour d'un axe horizontal (x), dans lequel le cadre de maintien (4) comprend au moins deux bras de maintien (5) qui peuvent pivoter, au niveau de leur extrémité proximale (6.1) par rapport au châssis inférieur (3) autour d'un axe (a) et qui comprennent, au niveau de leur extrémité distale (6.2) opposée à l'extrémité proximale (6.1), un moyen de fixation (6) pour une pièce (100), **caractérisé en ce que** l'axe (a), autour duquel pivotent les bras de maintien (5), s'étend perpendiculairement au plan de montage.

2. Porte-pièce (1) selon la revendication 1, dans lequel les deux bras de maintien (5) sont couplés par force en opposition en ce qui concerne leur capacité de pivotement autour de l'axe (a) qui s'étend perpendiculairement au plan de montage.

3. Porte-pièce (1) selon la revendication 2, dans lequel les deux bras de maintien (5) comprennent chacun, pour le couplage par force, au niveau de leur extrémité proximale (6.1), une denture (8) disposée respectivement sur un arc de cercle, ces dentures s'engrenant l'une dans l'autre.

4. Porte-pièce (1) selon l'une des revendications précédentes, dans lequel le cadre de maintien (4) comprend quatre des bras de maintien (5), qui mettent à disposition, avec leurs moyens de fixation (6), au niveau de leurs extrémités distale (6.2), quatre points de fixation aux angles d'un rectangle.

5. Porte-pièce (1) selon l'une des revendications précédentes, dans lequel les bras de maintien (5) sont télescopiques et présentent, pour différentes longueurs de bras de maintien, une position d'encliquetage.

6. Porte-pièce (1) selon l'une des revendications précédentes, dans lequel au moins un des bras de maintien (5) comprend, au niveau de son extrémité distale (6.2), une flèche (7) qui peut tourner autour de son axe de rotation (b) s'étendant perpendiculairement au plan de montage, et au niveau duquel le moyen de fixation (6) de l'au moins un bras de maintien (5) est disposé de manière excentrée.

7. Porte-pièce (1) selon l'une des revendications précédentes, dans lequel le cadre de maintien (4) comprend, pour le réglage en hauteur et/ou pour le pivotement autour de l'axe horizontal (x), un entraînement (11) qui peut être contrôlé, dans la position la plus basse du cadre de maintien (4), lors d'une orientation horizontale du cadre de maintien (4) uniquement dans au moins une position de rotation déterminée du cadre de maintien (4) autour de la normale au plan de montage.

8. Porte-pièce (1) selon l'une des revendications précédentes, dans lequel le cadre de maintien (4) peut tourner, grâce à un palier rotatif (16), autour de la normale au plan de montage, dans lequel le palier rotatif (16) comprend deux parties de palier (17, 18) rotatives l'une par rapport à l'autre, dont une première partie de palier (17) est réalisée de manière solidaire en rotation par rapport à la normale au plan de montage et par rapport au châssis inférieur et dans lequel une deuxième partie de palier (18) est réalisée de manière solidaire en rotation par rapport au reste du cadre de maintien (4).

9. Porte-pièce (1) selon la revendication 8, qui comprend, sur un côté orienté vers le cadre de maintien (4), de préférence sur un côté supérieur horizontal, du châssis inférieur (3), un bouton (9) qui repose, dans une position de rotation du cadre de maintien (4) autour de la normale différente de l'au moins une position de rotation déterminée du cadre de maintien (4) autour de la normale, avec sa tête de bouton (10), sur la deuxième partie de palier, dans lequel le bouton (9) est actionné et la contrôlabilité de l'entraînement (11) est interrompue et la deuxième partie de palier est réalisée, à cette fin, de préférence sous la forme d'une plaque à bride (12).

10. Porte-pièce (1) selon la revendication 9, dans lequel la première partie de palier présente un passage à travers lequel le bouton (9) dépasse au moins avec sa tête de bouton (10), lorsque le cadre de maintien (4) est disposé dans sa position la plus basse et est orienté horizontalement.

11. Porte-pièce (1) selon la revendication 9 ou 10, dans lequel le bouton (9) est logé, dans l'au moins une position de rotation déterminée, avec la tête de bouton (10), dans un évidement (14), dans lequel le bouton (9) est libéré et l'entraînement (11) peut être contrôlé.

12. Porte-pièce (1) selon l'une des revendications précédentes, dans lequel le cadre de maintien (4) peut être mis en rotation uniquement dans son orientation horizontale par rapport au châssis inférieur (3) autour d'un axe vertical (y), lorsque le cadre de maintien (3) est disposé dans sa position la plus basse, dans laquelle il repose sur le châssis inférieur (3).

13. Porte-pièce (1) selon la revendication 12, dans lequel le châssis inférieur (3) comprend, au niveau de son côté supérieur horizontal, sur lequel repose le cadre de maintien (4), au moins une saillie (13) qui dépasse, dans la position la plus basse, dans un alésage (20) du cadre de maintien (4) et qui déclenche une sécurité de rotation (15) hors de l'alésage (20), qui bloque le cadre de maintien (4) en ce qui concerne une rotation autour de l'axe vertical (y).

14. Porte-pièce (1) selon la revendication 13, dans lequel le cadre de maintien (4) peut être mis en rotation par l'intermédiaire d'un palier rotatif (16) autour de la normale au plan de montage, le palier rotatif (16) comprend, à cette fin, deux parties de palier rotatives (17, 18), dont une première partie de palier (17) est réalisée de manière solidaire en rotation par rapport à la normale au plan de montage et par rapport au châssis inférieur et dans lequel une deuxième partie de palier (18) est réalisée de manière solidaire en rotation par rapport au reste du cadre de maintien (4) et dans lequel la première partie de palier (17) comprend une plaque à bride (12) avec laquelle le cadre de maintien (4) repose, dans son orientation horizontale, sur le châssis inférieur (3), dans lequel la saillie (13) s'emboîte dans la plaque à bride (12) et fait sortir une tige de verrouillage (19) de la deuxième partie de palier hors de l'alésage (18).

15. Porte-pièce (1) selon la revendication 14, dans lequel la tige de verrouillage (19) de la deuxième partie de palier (18) est précontrainte mécaniquement et peut être réglée en direction de la première partie de palier (17), dans lequel l'alésage dans la plaque à bride (12) de la première partie de palier (17) est alésage de passage dans lequel la saillie (13) dépasse à travers un côté, orienté vers le châssis inférieur (3), de la plaque à bride (12), dans lequel la saillie (13) fait sortir la tige de verrouillage (19) hors de la plaque à bride (12), en direction d'un côté opposé et orienté vers la deuxième partie de palier (18), de la plaque à bride (12), lorsque le cadre de maintien (3) est disposé dans position la plus basse.
